# EUROPEAN PATENT APPLICATION

(11) **EP 4 462 697 A1**
(43) Date of publication of application: **13.11.2024**
(21) Application number: 23777717.2
(22) Date of filing: 24.02.2023
(51) Int. Cl.: H04B 10/27

(54) **PASSIVE CONVERGENCE LAYER NETWORK DEVICE, AND NETWORK SYSTEM AND OPERATING METHOD THEREFOR**

(30) Priority: 30.03.2022 CN 202210331892; 04.07.2022 CN 202210777625
(71) Applicant: Ruijie Networks Co., Ltd., Fuzhou, Fujian 350002 (CN)
(72) Inventor: XIE, Haiyang, Fuzhou, Fujian 350002 (CN)
(74) Representative: Boult Wade Tennant LLP
(86) International application number: PCT/CN2023/078199
(87) International publication number: WO 2023/185339

(57) **Abstract**

Provided in the present invention are a passive convergence layer network device, and a network system and an operating method therefor. The passive convergence layer network device comprises a first multiplexer/demultiplexer, a second multiplexer/demultiplexer, and an optical fiber, wherein the first multiplexer/demultiplexer receives an optical signal from each access layer network device optical module which is connected thereto, couples the received optical signals to obtain a first coupled optical signal, and sends the first coupled optical signal to the second multiplexer/demultiplexer by means of the optical fiber; and the second multiplexer/demultiplexer decouples the first coupled optical signal, and transmits the obtained optical signals to corresponding core layer network device optical modules. Because the convergence layer network device is a passive network device, there is no need to separately store the convergence layer network device in a special weak current room, and the convergence layer network device can still be used even when there is no weak current room or the environment of the weak current room is poor, such that the applicability of a network system is greatly improved.

## Description

### CROSS-REFERENCE TO RELATED APPLICATIONS

The present application is a continuation of International Patent Application No. PCT/CN2023/078199, which claims priority to a Chinese patent application No. 202210331892.8, filed on March 30, 2022, and a Chinese patent application No. 202210777625.3, filed on July 4, 2022, all of which are incorporated herein by reference in their entireties.

### TECHNICAL FIELD

The present application relates to the field of communication technologies, and in particular, to a passive aggregation-layer network device, a network system, and a working method for a passive aggregation-layer network device.

### BACKGROUND

In a conventional three-layer network networking mode, a three-layer network includes a core layer, an aggregation layer, and an access layer. Each network device at the access layer is referred to as an access-layer network device, each network device at the aggregation layer is referred to as an aggregation-layer network device, and each network device at the core layer is referred to as a core-layer network device. The access-layer network device, the aggregation-layer network device, and the core-layer network device are all active network devices. For a campus including one or more buildings, such as a school, a hospital, an enterprise, and a government office, the core-layer network device is generally deployed in a data center equipment room of the campus, the aggregation-layer network device is generally deployed in a low voltage room of each building of the campus, and the access-layer network device is generally deployed in a low voltage room of each building of the campus and a low voltage room of each floor.

The conventional three-layer network networking is widely used in practice since the networking mode has good performance, clear hierarchy, and is intuitive and convenient during network management. However, the conventional three-layer network networking mode also has disadvantages. For example: (1) Since the aggregation-layer network device is an active network device and is placed in the low voltage room, devices such as an uninterruptible power supply (UPS) and an air conditioner need to be configured in the low voltage room to maintain normal running of the low voltage room. As a result, operation and maintenance management of the low voltage room is complex, and running costs are increased. When the aggregation-layer network device is an active network device, a requirement for the low voltage room is high. Without a low voltage room or when the low voltage room is in a tough environment, the aggregation-layer network device cannot be deployed. (2) Since a copper cable is used to connect the access-layer network device in the low voltage room of each floor to a terminal network device in each room, layout needs to be performed in advance. As a result, costs are high, and it is difficult to add new nodes subsequently, that is, the scalability is poor.

Therefore, an aggregation-layer network device is needed, to resolve problems in the conventional three-layer network networking mode, for example, the deployment requirement for the low voltage room is high, the expansion of the access-layer network devices is difficult, and the operation and maintenance costs are high.

### SUMMARY

To resolve the foregoing problem, the present application provides a passive aggregation-layer network device. The passive aggregation-layer network device includes a first multiplexer/demultiplexer, a second multiplexer/demultiplexer, and an optical fiber connecting the first multiplexer/demultiplexer with the second multiplexer/demultiplexer. The first multiplexer/demultiplexer includes a specified quantity of optical interfaces, and each optical interface of the first multiplexer/demultiplexer is connected to an optical module of one access-layer network device. The second multiplexer/demultiplexer includes the specified quantity of optical interfaces, and each optical interface of the second multiplexer/demultiplexer is connected to one optical module of an core-layer network device. The first multiplexer/demultiplexer receives optical signals from a plurality of optical modules of access-layer network devices connected to the first multiplexer/demultiplexer, couples the received optical signals to obtain a first coupled optical signal, and sends the first coupled optical signal to the second multiplexer/demultiplexer by using the optical fiber. The second multiplexer/demultiplexer decouples the first coupled optical signal, and transmits obtained optical signals to corresponding optical modules of the core-layer network device.

The passive aggregation-layer network device in the present application has the following advantages: (1) Since the aggregation-layer network device is a passive network device, the aggregation-layer network device does not need to be separately placed in a dedicated low voltage room. Therefore, devices such as a UPS and an air conditioner do not need to be configured, so that operation and maintenance difficulty is reduced and costs of the low voltage room are spared. (2) Since the aggregation-layer network device is a passive network device, a requirement for the low voltage room is greatly reduced, and the aggregation-layer network device may be used even without a low voltage room or when the low voltage room is in a tough environment. This greatly expands an application range, and greatly improves adaptability of the passive aggregation-layer network device.

In a possible implementation, the second multiplexer/demultiplexer receives optical signals from a plurality of optical modules of the core-layer network device connected to the second multiplexer/demultiplexer, couples the received optical signals to obtain a second coupled optical signal, and sends the second coupled optical signal to the first multiplexer/demultiplexer by using the optical fiber; and the first multiplexer/demultiplexer decouples the second coupled optical signal, and transmits obtained optical signals to corresponding optical modules of the access-layer network devices.

In a possible implementation, the optical modules of the access-layer network devices and the optical modules of the core-layer network each device have a transmit center wavelength and a receive center wavelength, a transmit center wavelength and a receive center wavelength of a same optical module of an access-layer network device are different, and a transmit center wavelength and a receive center wavelength of a same optical module of the core-layer network device have different wavelengths.

In a possible implementation, a transmit center wavelength of each optical module of the access-layer network devices is different from transmit center wavelengths of other optical modules of the access-layer network devices, and a receive center wavelength of each optical module of the access-layer network devices is different from receive center wavelengths of other optical modules of the access-layer network devices.

In a possible implementation, a transmit center wavelength of each optical module of the core-layer network device is different from transmit center wavelengths of other optical modules of the core-layer network device, and a receive center wavelength of each optical module of the core-layer network device is different from receive center wavelengths of other optical modules of the core-layer network device.

In a possible implementation, a transmit center wavelength and a receive center wavelength of an optical modules of the access-layer network devices respectively correspond to a receive center wavelength and a transmit center wavelength of an optical module of the core-layer network device.

In a possible implementation, when the first multiplexer/demultiplexer and the second multiplexer/demultiplexer are of a type of a coarse wavelength division multiplexer.

In a possible implementation, when the first multiplexer/demultiplexer and the second multiplexer/demultiplexer are of a type of a dense wavelength division multiplexer.

In a possible implementation, the passive aggregation-layer network device includes a plurality of aggregation modules, the plurality of aggregation modules include a first aggregation module and a second aggregation module, the first aggregation module includes a first multiplexer/demultiplexer, a second multiplexer/demultiplexer, and a first optical fiber connecting the first multiplexer/demultiplexer with the second multiplexer/demultiplexer, and the second aggregation module includes a third multiplexer/demultiplexer, a fourth multiplexer/demultiplexer, and a second optical fiber connecting the third multiplexer/demultiplexer with the fourth multiplexer/demultiplexer.

In a possible implementation, a specified quantity of optical interfaces in the first multiplexer/demultiplexer and a specified quantity of optical interfaces in the second multiplexer/demultiplexer are the same as or different from a specified quantity of optical interfaces in the third multiplexer/demultiplexer and a specified quantity of optical interfaces in the fourth multiplexer/demultiplexer.

Another aspect of the present application further provides a network system, where the network system includes at least one core-layer network device, any one of the foregoing passive aggregation-layer network device, and at least two access-layer network devices.

The network system in the present application has the following advantages: (1) The access-layer network device in the present application may be placed in a room and connected to a terminal device, and is connected to the aggregation-layer network device by using an indoor optical fiber, so that a new node can be added at any time subsequently. (2) In the network system in the present application, a use habit that a customer only needs to operate and maintain an Ethernet is retained, and features such as Ethernet point-to-point, a high bandwidth, and a low delay are also retained. In an actually using process, the cost of network reconstruction cost is low.

In a possible implementation, the core-layer network device and the access-layer network device each include at least one optical module.

Another aspect of the present application further provides a working method for a passive aggregation-layer network device, where the passive aggregation-layer network device includes a first multiplexer/demultiplexer, a second multiplexer/demultiplexer, and an optical fiber connecting the first multiplexer/demultiplexer with the second multiplexer/demultiplexer, the first multiplexer/demultiplexer is connected to several access-layer network devices, the second multiplexer/demultiplexer is connected to several core-layer network devices, and the working method for a passive aggregation-layer network device includes the following steps: The first multiplexer/demultiplexer receives optical signals from a plurality of optical modules of the access-layer network devices connected to the first multiplexer/demultiplexer, couples the received optical signals to obtain a first coupled optical signal, and sends the first coupled optical signal to the second multiplexer/demultiplexer by using the optical fiber; and the second multiplexer/demultiplexer decouples the first coupled optical signal, and transmits obtained optical signals to corresponding optical modules of the core-layer network devices.

In a possible implementation, the second multiplexer/demultiplexer receives optical signals from a plurality of optical modules of the core-layer network devices connected to the second multiplexer/demultiplexer, couples the received optical signals to obtain a second coupled optical signal, and sends the second coupled optical signal to the first multiplexer/demultiplexer by using the optical fiber; and the first multiplexer/demultiplexer decouples the second coupled optical signal, and transmits obtained optical signals to corresponding optical modules of the access-layer network devices.

Based on the working method for a passive aggregation-layer network device provided in the present application, the aggregation-layer network device can forward an optical signal in a network system of a campus network. Since the aggregation-layer network device is passive, a requirement for a low voltage room is greatly reduced relative to an active aggregation-layer network device. This greatly expands an application range, and greatly improves applicability of the passive aggregation-layer network device.

### BRIEF DESCRIPTION OF DRAWINGS

FIG. 1 is diagram of a network system according to an embodiment of the present application.
FIG. 2 is a structural diagram of a passive aggregation-layer network device according to an embodiment of the present application.
FIG. 3 is a schematic diagram of a wavelength allocation and use manner of a first multiplexer/demultiplexer according to an embodiment of the present application.
FIG. 4 is a schematic diagram of a wavelength allocation and use manner of a second multiplexer/demultiplexer according to an embodiment of the present application.
FIG. 5 is a schematic diagram of another wavelength allocation and use manner of a first multiplexer/demultiplexer according to an embodiment of the present application.
FIG. 6 is a schematic diagram of another wavelength allocation and use manner of a second multiplexer/demultiplexer according to an embodiment of the present application.
FIG. 7 is a schematic diagram of a network system according to an embodiment of the present application.
FIG. 8 is a flowchart of an upstream signal forwarding method for a passive aggregation-layer network device according to an embodiment of the present application.
FIG. 9 is a flowchart of a downstream signal forwarding method for a passive aggregation-layer network device according to an embodiment of the present application.

### DESCRIPTION OF EMBODIMENTS

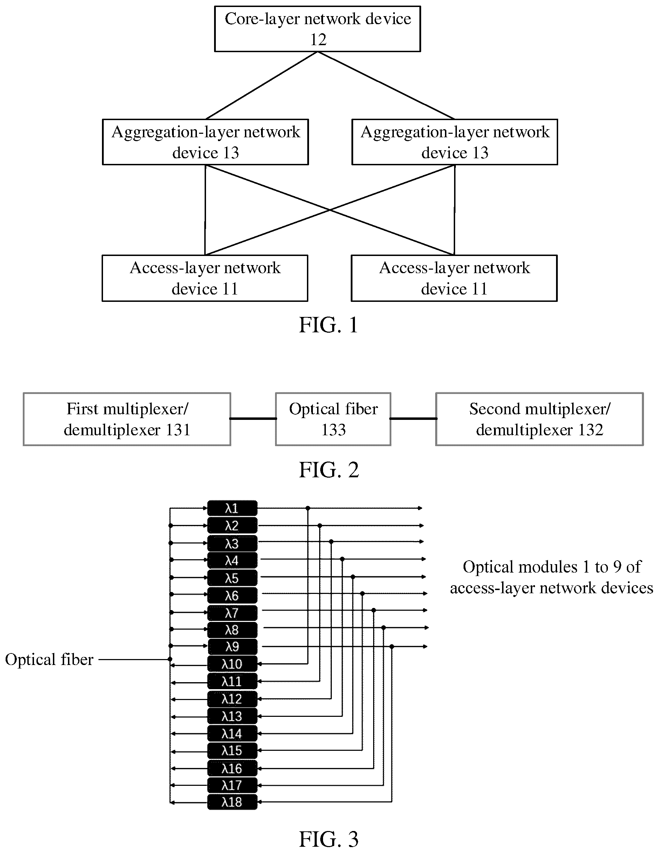

For a problem of poor adaptability of an active aggregation-layer network device, an embodiment of the present application provides a passive aggregation-layer network device, applied to a network system shown in FIG. 1. The network system includes at least one core-layer network device 12, at least two access-layer network devices 11, and at least two passive aggregation-layer network devices 13. Quantities of core-layer network devices, aggregation-layer network devices, and access-layer network devices may be set based on an actual requirement. A case in which one core-layer network device, two aggregation-layer network devices, and two access-layer network devices are included is shown in the figure. Various other possible cases are not described herein.
FIG. 2 is a structural diagram of a passive aggregation-layer network device according to an embodiment of the present application. The passive aggregation-layer network device 13 includes a first multiplexer/demultiplexer 131, a second multiplexer/demultiplexer 132, and an optical fiber 133 connecting the first multiplexer/demultiplexer 131 with the second multiplexer/demultiplexer 132. The first multiplexer/demultiplexer 131 includes a specified quantity of optical interfaces, and each optical interface is connected to an access-layer network device 11 by using an optical module. The second multiplexer/demultiplexer 132 includes a specified quantity of optical interfaces, and each optical interface is connected to a core-layer network device 12 by using an optical module. It should be noted that the optical module may be disposed inside the access-layer network device 11 and the core-layer network device 12, or may be an independent component. This is not limited herein. For ease of description, in the following descriptions, the optical modules are considered as being disposed inside the access-layer network devices 11 and the core-layer network device 12. A transmit center wavelength and a receive center wavelength may be set for each optical module. The transmit center wavelength and the receive center wavelength of each optical module are different. One or more optical modules may be disposed in each core-layer network device and each access-layer network device based on an actual requirement. A specific optical module is not shown in FIG. 2.

The first multiplexer/demultiplexer 131 is configured to: couple received optical signals from optical modules of access-layer network devices to obtain a first coupled optical signal, and transmit the first coupled optical signal to the second multiplexer/demultiplexer 132 by using the optical fiber 133. The second multiplexer/demultiplexer 132 is configured to: decouple the first coupled optical signal, and transmit obtained optical signals to corresponding optical modules of a core-layer network device; and/or couple received optical signals from optical modules of the core-layer network device to obtain a second coupled optical signal, and transmit the second coupled optical signal to the first multiplexer/demultiplexer 131 by using the optical fiber 133. In addition, the first multiplexer/demultiplexer 131 is further configured to: decouple the second coupled optical signal, and transmit obtained optical signals to corresponding optical modules of access-layer network devices.

The passive aggregation-layer network device in this embodiment of the present application includes a plurality of aggregation modules, the plurality of aggregation modules include a first aggregation module and a second aggregation module, the first aggregation module includes the first multiplexer/demultiplexer 131, the second multiplexer/demultiplexer 132, and the first optical fiber 133 connecting the first multiplexer/demultiplexer 131 with the second multiplexer/demultiplexer 132. The second aggregation module includes a third multiplexer/demultiplexer, a fourth multiplexer/demultiplexer, and a second optical fiber connecting the third multiplexer/demultiplexer with the fourth multiplexer/demultiplexer. As the aggregation module in the passive aggregation-layer network device is increased, a quantity of optical modules of access-layer network devices connected to the passive aggregation-layer network device and a quantity of optical modules of a core-layer network device connected to the passive aggregation-layer network device can be increased, thereby increasing a capacity of the aggregation-layer network device. In this embodiment of the present application, a quantity of aggregation modules is not limited, and may be set based on an actual situation.

Specifically, a type of the first multiplexer/demultiplexer and a type of the second multiplexer/demultiplexer may be selected based on an actual requirement, and may be but are not limited to a coarse wavelength division multiplexer (CWDM) or a dense wavelength division multiplexer (DWDM) or a multi-wavelength division multiplexer (MWDM). The multiplexer/demultiplexer is described below by using the CWDM and the DWDM as an example.

In a first case, the type of the first multiplexer/demultiplexer and the type of the second multiplexer/demultiplexer are selected as a CWDM. In this case, the specified quantity of optical interfaces in the first multiplexer/demultiplexer and the specified quantity of optical interfaces in the second multiplexer/demultiplexer do not exceed m, for example, m=9, and a maximum specified quantity of optical interfaces may be adjusted based on technology development. This is not limited herein.

The CWDM may transmit, in a same optical fiber through coupling, a plurality of optical signals with different wavelengths spaced 20 nm apart in multiple paths. The CWDM is in a structure including a filter having a center wavelength of λn and three ports including a common port, a transmission port, and a reflection port. The transmission port is at one side of the filter, and the reflection port and the common port are both at the other side thereof. The filter is highly transparent only to an optical signal with a wavelength in a range of λn±6.5 nm, and is highly reflective to an optical signal with a wavelength not in the range of kn±6.5 nm.

An example in which m=9 is used below. The CWDM has a total of 18 wavelengths. As shown in FIG. 3, the first multiplexer/demultiplexer selects nine wavelengths (λ1 to λ9) thereof to allocate the nine wavelengths to nine optical modules of access-layer network devices, and allocates the other nine wavelengths (λ10 to λ18) to nine optical modules of a core-layer network device. The first multiplexer/demultiplexer supports a maximum of 1:9 upstream multiplexing.

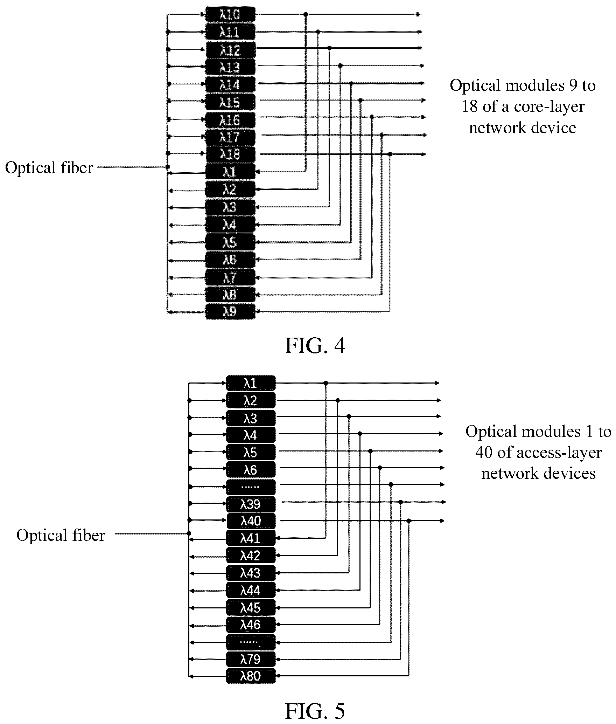

The CWDM has a total of 18 wavelengths. As shown in FIG. 4, the second multiplexer/demultiplexer selects nine wavelengths (λ1 to λ9) thereof to allocate the nine wavelengths to nine optical modules of access-layer network devices, and allocates the other nine wavelengths (λ10 to λ18) to nine optical modules of a core-layer network device. The second multiplexer/demultiplexer supports a maximum of 1:9 upstream multiplexing.

Based on this, matching logic of each wavelength is shown in the following Table 1. As shown in Table 1, each optical module has a transmit center wavelength and a receive center wavelength, and the transmit center wavelength and the receive center wavelength of each optical module are different. In optical modules of a core-layer network device and optical modules of all access-layer network devices that are connected by using a same aggregation module, for each optical module of an access-layer network device, an optical module of the core-layer network device corresponding to the optical module of the access-layer network device exists, that is, the receive center wavelength of the optical module of the core-layer network device corresponds to the transmit center wavelength of the optical module of the access-layer network device, and the transmit center wavelength of the optical module of the core-layer network device corresponds to the receive center wavelength of the optical module of the access-layer network device. In an optical module of each access-layer network device connected by using a same aggregation module, a transmit center wavelength of an optical module of each access-layer network device is different from a transmit center wavelength of an optical module of another access-layer network device, and a receive center wavelength of an optical module of each access-layer network device is different from a receive center wavelength of an optical module of another access-layer network device. Similarly, in each optical module of the core-layer network device connected by using a same aggregation module, a transmit center wavelength of each optical module of the core-layer network device is different from a transmit center wavelength of another optical module of the core-layer network device, and a receive center wavelength of each optical module of the core-layer network device is different from a transmit center wavelength of another optical module of the core-layer network device.

A plurality of aggregation modules are disposed in the passive aggregation-layer network device, so that quantities of access-layer network devices that are connected to the aggregation-layer network device can be increased, and a capacity of an aggregation-layer network device can be expanded. For an aggregation-layer network device with a plurality of aggregation modules, two aggregation modules are used as an example below to describe a quantity of optical interfaces in a multiplexer/demultiplexer in the aggregation module and a transmit center wavelength and a receive center wavelength of an optical module connected to the optical interface. The aggregation-layer network device includes the first aggregation module and the second aggregation module, the first aggregation module includes the first multiplexer/demultiplexer, the second multiplexer/demultiplexer, and the first optical fiber connecting the first multiplexer/demultiplexer with the second multiplexer/demultiplexer, and the second aggregation module includes the third multiplexer/demultiplexer, the fourth multiplexer/demultiplexer, and the second optical fiber connecting the third multiplexer/demultiplexer with the fourth multiplexer/demultiplexer. Six optical interfaces are disposed in each of the first multiplexer/demultiplexer and the second multiplexer/demultiplexer. Optical modules of the core-layer network device connected to the second multiplexer/demultiplexer are numbered C1, C2, C4, C5, C6, and C9 in Table 1, and optical modules of access-layer network devices connected to the first multiplexer/demultiplexer are numbered A1, A2, A4, A5, A6, and A9 in Table 1. Five optical interfaces are disposed in each of the third multiplexer/demultiplexer and the fourth multiplexer/demultiplexer. Optical modules of the core-layer network device connected to the fourth multiplexer/demultiplexer are numbered C1, C2, C3, C7, and C8 in Table 1, and optical modules of access-layer network devices connected to the third multiplexer/demultiplexer are numbered A1, A2, A3, A7, and A8 in Table 1. It may be learned from the foregoing embodiment that quantities of optical interfaces of multiplexers/demultiplexers in different aggregation modules may be different. Certainly, quantities of optical interfaces of multiplexers/demultiplexers in different aggregation modules may be the same (which is not described herein by using an example). Transmit center wavelengths of two optical modules of the core-layer network device connected to multiplexers/demultiplexers in different aggregation modules may be the same or different, and receive center wavelengths of the two optical modules thereof may be the same or different. Transmit center wavelengths of two optical modules of access-layer network devices connected to multiplexers/demultiplexers in different aggregation modules may be the same or different, and receive center wavelengths of the two optical modules thereof may be the same or different.

**Table 1**

| **Optical module number** | **Optical module** | | |
|---|---|---|---|
| | **Allocation of a transmit center wavelength of the optical module** | **Allocation of a receive center wavelength of the optical module** | **Remarks** |
| C1 | λ1 | λ10 | Optical module 1 of a core-layer network device |
| C2 | λ2 | λ11 | Optical module 2 of the core-layer network device |
| C3 | λ3 | λ12 | Optical module 3 of the core-layer network device |
| C4 | λ4 | λ13 | Optical module 4 of the core-layer network device |
| C5 | λ5 | λ14 | Optical module 5 of the core-layer network device |
| C6 | λ6 | λ15 | Optical module 6 of the core-layer network device |
| C7 | λ7 | λ16 | Optical module 7 of the core-layer network device |
| C8 | λ8 | λ17 | Optical module 8 of the core-layer network device |
| C9 | λ9 | λ18 | Optical module 9 of the core-layer network device |
| A1 | λ10 | λ1 | Optical module 1 of an access-layer network device |
| A2 | λ11 | λ2 | Optical module 2 of an access-layer network device |
| A3 | λ12 | λ3 | Optical module 3 of an access-layer network device |
| A4 | λ13 | λ4 | Optical module 4 of an access-layer network device |
| A5 | λ14 | λ5 | Optical module 5 of an access-layer network device |
| A6 | λ15 | λ6 | Optical module 6 of an access-layer network device |
| A7 | λ16 | λ7 | Optical module 7 of an access-layer network device |
| A8 | λ17 | λ8 | Optical module 8 of an access-layer network device |
| A9 | λ18 | λ9 | Optical module 9 of an access-layer network device |

In a second case, the type of the first multiplexer/demultiplexer and the type of the second multiplexer/demultiplexer are selected as a DWDM. In this case, the specified quantity of optical interfaces in the first multiplexer/demultiplexer and the specified quantity of optical interfaces in the second multiplexer/demultiplexer do not exceed n, for example, n=40, and a maximum specified quantity of optical interfaces may be adjusted based on technology development.

The DWDM may transmit, in a same optical fiber through coupling, a plurality of optical signals with different wavelengths spaced 0.2 nm apart in multiple paths. The DWDM is in a structure including a filter having a center wavelength of kn, and three ports including a common port, a transmission port, and a reflection port. The transmission port is on one side of the filter, and the reflection port and the common port are both on the other side thereof. The filter is highly transparent only to an optical signal with a wavelength in a specific range, and is highly reflective to an optical signal with a wavelength in another range.

An example in which n=40 is used. A mature DWDM has a total of 80 wavelengths. It is assumed that, as shown in FIG. 5, the first multiplexer/demultiplexer selects 40 wavelengths (λ1 to λ40) thereof to allocate the 40 wavelengths to 40 optical modules of access-layer network devices, and allocates the other 40 wavelengths (λ41 to λ80) to 40 optical modules of a core-layer network device. The first multiplexer/demultiplexer supports a maximum of 1:40 upstream multiplexing.

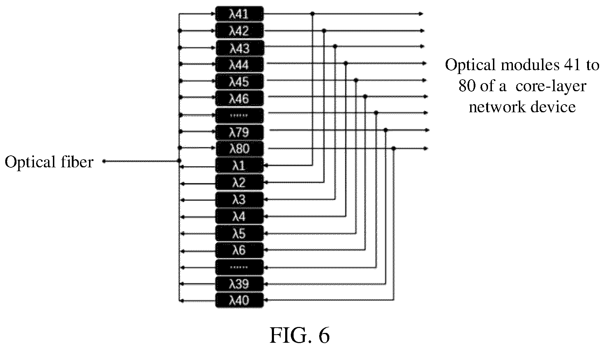

A mature DWDM has a total of 80 wavelengths. It is assumed that, as shown in FIG. 6, the second multiplexer/demultiplexer selects 40 wavelengths (λ1 to λ40) thereof to allocate the 40 wavelengths to 40 optical modules of access-layer network devices, and allocates the other 40 wavelengths (λ41 to λ80) to 40 optical modules of the core-layer network device. The second multiplexer/demultiplexer supports a maximum of 1:40 upstream multiplexing.

Based on this, matching logic of each wavelength is shown in the following Table 2. As shown in Table 2, each optical module has a transmit center wavelength and a receive center wavelength, and the transmit center wavelength and the receive center wavelength of each optical module are different. In optical modules of a core-layer network device and optical modules of all access-layer network devices that are connected by using a same aggregation module, for each optical module of an access-layer network device, an optical module of the core-layer network device corresponding to the optical module of the access-layer network device exists. In an optical module of each access-layer network device connected by using a same aggregation module, a transmit center wavelength of an optical module of each access-layer network device is different from a transmit center wavelength of an optical module of another access-layer network device, and a receive center wavelength of an optical module of each access-layer network device is different from a receive center wavelength of an optical module of another access-layer network device. Similarly, in an optical module of each core-layer network device connected by using a same aggregation module, a transmit center wavelength of an optical module of the core-layer network device is different from a transmit center wavelength of another optical module of the core-layer network device, and a receive center wavelength of an optical module of the core-layer network device is different from a transmit center wavelength of another optical module of the core-layer network device.

A plurality of aggregation modules are disposed in the passive aggregation-layer network device, so that quantities of access-layer network devices and core-layer network devices that are connected to the aggregation-layer network device can be increased, and a capacity of an aggregation-layer network device can be expanded. For an aggregation-layer network device with a plurality of aggregation modules, two aggregation modules are used as an example below to describe a quantity of optical interfaces in a multiplexer/demultiplexer in the aggregation module and a transmit center wavelength and a receive center wavelength of an optical module connected to the optical interface. The aggregation-layer network device includes the first aggregation module and the second aggregation module, the first aggregation module includes the first multiplexer/demultiplexer, the second multiplexer/demultiplexer, and the first optical fiber connecting the first multiplexer/demultiplexer with the second multiplexer/demultiplexer, and the second aggregation module includes the third multiplexer/demultiplexer, the fourth multiplexer/demultiplexer, and the second optical fiber connecting the third multiplexer/demultiplexer with the fourth multiplexer/demultiplexer. Six optical interfaces are disposed in each of the first multiplexer/demultiplexer and the second multiplexer/demultiplexer. Optical modules of the core-layer network device connected to the second multiplexer/demultiplexer are numbered C1, C2, C4, C5, C6, and C9 in Table 2, and optical modules of access-layer network devices connected to the first multiplexer/demultiplexer are numbered A1, A2, A4, A5, A6, and A9 in Table 2. Five optical interfaces are disposed in each of the third multiplexer/demultiplexer and the fourth multiplexer/demultiplexer. Optical modules of the core-layer network device connected to the fourth multiplexer/demultiplexer are numbered C1, C2, C3, C7, and C8 in Table 2, and optical modules of access-layer network devices connected to the third multiplexer/demultiplexer are numbered A1, A2, A3, A7, and A8 in Table 2. It may be learned from the foregoing embodiment that quantities of optical interfaces of multiplexers/demultiplexers in different aggregation modules may be different. Certainly, quantities of optical interfaces of multiplexers/demultiplexers in different aggregation modules may be the same (which is not described herein by using an example). Transmit center wavelengths of two optical modules of the core-layer network device connected to multiplexers/demultiplexers in different aggregation modules may be the same or different, and receive center wavelengths of the two optical modules thereof may be the same or different. Transmit center wavelengths of two optical modules of access-layer network devices connected to multiplexers/demultiplexers in different aggregation modules may be the same or different, and receive center wavelengths of the two optical modules thereof may be the same or different.

**Table 2**

| **Optical module number** | **Optical module** | | |
|---|---|---|---|
| | **Allocation of a transmit center wavelength of the optical module** | **Allocation of a receive center wavelength of the optical module** | **Remarks** |
| C1 | λ1 | λ41 | Optical module 1 of a core-layer network device |
| C2 | λ2 | λ42 | Optical module 2 of the core-layer network device |
| C3 | λ3 | λ43 | Optical module 3 of the core-layer network device |
| C4 | λ4 | λ44 | Optical module 4 of the core-layer network device |
| C5 | λ5 | λ45 | Optical module 5 of the core-layer network device |
| C6 | λ6 | λ46 | Optical module 6 of the core-layer network device |
| ... | ... | ... | ... |
| C39 | λ39 | λ79 | Optical module 39 of the core-layer network device |
| C40 | λ40 | λ80 | Optical module 40 of the core-layer network device |
| A1 | λ41 | λ1 | Optical module 1 of an access-layer network device |
| A2 | λ42 | λ2 | Optical module 2 of an access-layer network device |
| A3 | λ43 | λ3 | Optical module 3 of an access-layer network device |
| A4 | λ44 | λ4 | Optical module 4 of an access-layer network device |
| A5 | λ45 | λ5 | Optical module 5 of an access-layer network device |
| A6 | λ46 | λ6 | Optical module 6 of an access-layer network device |
| ... | ... | ... | ... |
| A39 | λ79 | λ39 | Optical module 39 of an access-layer network device |
| A40 | λ80 | λ40 | Optical module 40 of an access-layer network device |

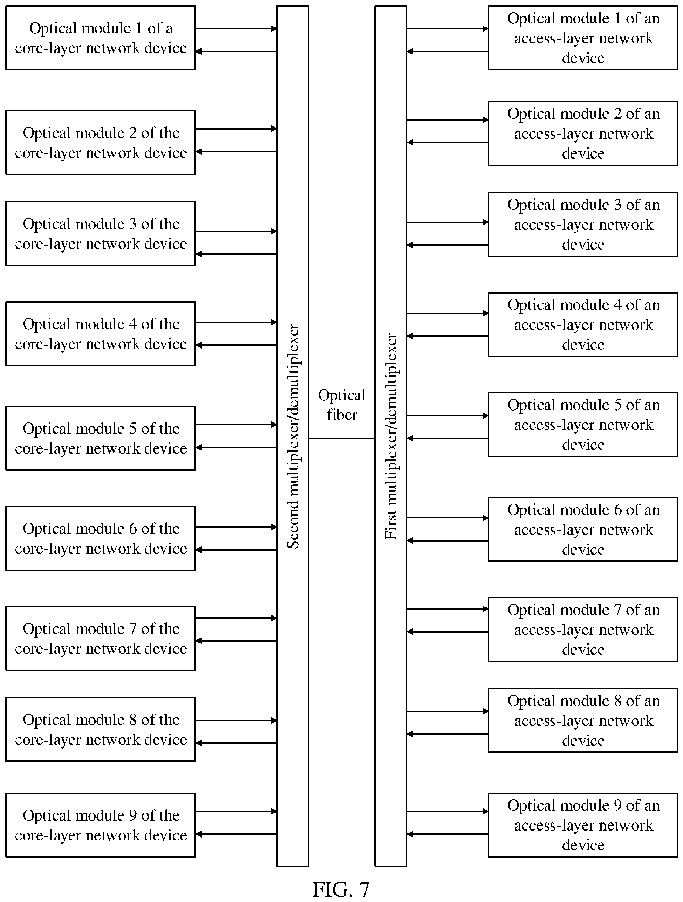

FIG. 7 is a schematic diagram of a network system according to an embodiment of the present application. The network system includes nine optical modules of access-layer network devices, one aggregation module of a passive network aggregation layer, and nine optical modules of one core-layer network device.

The aggregation module includes a first multiplexer/demultiplexer, an optical fiber, and a second multiplexer/demultiplexer. In this embodiment, nine optical interfaces are disposed in the first multiplexer/demultiplexer to connect to the optical modules of the access-layer network devices, and another optical interface is disposed in the first multiplexer/demultiplexer to connect to the optical fiber, to implement connection to the second multiplexer/demultiplexer. Nine optical interfaces are disposed in the second multiplexer/demultiplexer to connect to the optical modules of the core-layer network device, and another optical interface is disposed in the second multiplexer/demultiplexer to connect to the optical fiber, to implement connection to the first multiplexer/demultiplexer. FIG. 7 only exemplarily illustrates an embodiment of a network system that includes a passive network aggregation layer. A quantity of optical modules of the core-layer network device and a quantity of optical modules of access-layer network devices are not limited herein, and a quantity of optical interfaces in the first multiplexer/demultiplexer and a quantity of optical interfaces in the second multiplexer/demultiplexer are not limited. The foregoing quantity may be adjusted and set based on an actual requirement.

In FIG. 7, based on the wavelength allocation principle of the optical module in Table 1 and Table 2, each optical module has a transmit center wavelength and a receive center wavelength, and the transmit center wavelength and the receive center wavelength have different wavelengths. In the network system shown in FIG. 7, there is only one aggregation module. Therefore, for the optical module of the access-layer network device, a unique optical module of the core-layer network device corresponds to the optical module of the access-layer network device, that is, a transmit center wavelength and a receive center wavelength of the optical module of the access-layer network device are the same as a receive center wavelength and a transmit center wavelength of the optical module of the core-layer network device. For example, for an optical module 1 of an access-layer network device, a unique optical module of a core-layer network device corresponding to the optical module 1 of the access-layer network device exists. For example, the optical module 1 of the core-layer network device is the corresponding unique optical module. In this case, a transmit center wavelength of the optical module 1 of the access-layer network device is the same as a receive center wavelength of the optical module 1 of the core-layer network device, and a receive center wavelength of the optical module 1 of the access-layer network device is the same as a transmit center wavelength of the optical module 1 of the core-layer network device. A transmit center wavelength of an optical module of each access-layer network device is different from a transmit center wavelength of an optical module of another access-layer network device, and a receive center wavelength of an optical module of each access-layer network device is different from a receive center wavelength of an optical module of another access-layer network device. Similarly, for each optical module of the core-layer network device connected by using the same aggregation module, a transmit center wavelength of an optical module of the core-layer network device is different from a transmit center wavelength of another optical module of the core-layer network device, and a receive center wavelength of an optical module of the core-layer network device is different from a transmit center wavelength of another optical module of the core-layer network device. Each optical module of an access-layer network device is connected to one access-layer network device. A same access-layer network device may be connected to a plurality of optical modules of access-layer network devices, or a plurality of optical modules of access-layer network devices may be disposed in a same access-layer network device. Each optical module of a core-layer network device is connected to one core-layer network device. A same core-layer network device may be connected to a plurality of optical modules of core-layer network devices, or a plurality of optical modules of core-layer network devices may be disposed in a same core-layer network device.

Based on the network system including the passive aggregation-layer network device provided in this embodiment of the present application, the core-layer network device 12 is still placed in a data center equipment room of a campus, the passive aggregation-layer network device 13 may be still disposed in a low voltage room of a building or a floor, and the access-layer network device 11 may be directly placed indoors such as a classroom or an office room. The access-layer network device 11 is connected to the passive aggregation-layer network device 13 by using an indoor optical fiber cable, and the passive aggregation-layer network device 13 deployed in the building or the floor is connected to the core-layer network device 12 by using an outdoor optical fiber cable.

Therefore, compared with a manner of removing the aggregation-layer network device 13 and directly connecting the access-layer network device 11 to the core-layer network device 12, the passive aggregation-layer network device 13 is disposed, so that use of a feeder optical fiber (namely, the outdoor optical fiber) is greatly reduced, cabling is simple, reconstruction difficulty is reduced, and manual costs of deployment are reduced. Therefore, based on the network system provided in this embodiment of the present application, a network architecture design that many networks in the market have only one Ethernet is still maintained, a user habit that a customer only needs to operate and maintain the Ethernet is retained, and features such as Ethernet point-to-point, a high bandwidth, and a low delay are also retained. In an actual use process, reconstruction costs are lower, market acceptance is high, there is a good business prospect and an actual application value.

In the passive aggregation-layer network device provided in this embodiment of the present application, the passive aggregation-layer network device includes the first multiplexer/demultiplexer 131, the second multiplexer/demultiplexer 132, and the optical fiber 133 connected to the first multiplexer/demultiplexer 131 and the second multiplexer/demultiplexer 132. These devices are all passive devices. Therefore, the aggregation-layer network device 13 is passive, and the network system including the passive aggregation-layer network device provided in this embodiment of the present application has the following advantages: (1) Since the aggregation-layer network device is a passive network device, the aggregation-layer network device does not need to be separately placed in a dedicated low voltage room. Therefore, devices such as a UPS and an air conditioner do not need to be configured, so that operation and maintenance difficulty and costs of the low voltage room are reduced. (2) Since the aggregation-layer network device is a passive network device, a requirement for the low voltage room is greatly reduced, and the aggregation-layer network device may be used even when there is no low voltage room or an environment of the low voltage room is poor. This greatly expands an application range, and greatly improves adaptability of the passive aggregation-layer network device. (3) The access-layer network device may be placed in a room and connected to a terminal device, and is connected to the aggregation-layer network device by using an indoor optical fiber, so that a new access point can be added at any time in a later stage, and scalability is strong. (4) In the network system, a use habit that a customer only needs to operate and maintain an Ethernet is retained, and features such as Ethernet point-to-point, a high bandwidth, and a low delay are also retained. In an actual use process, the cost of network reconstruction is low, and there is a good business prospect and an actual application value.

The structure of the passive aggregation-layer network device is described above. A working method for the network system in FIG. 7 is described below. Main tasks of the network system include upstream optical signal forwarding and downstream optical signal forwarding.

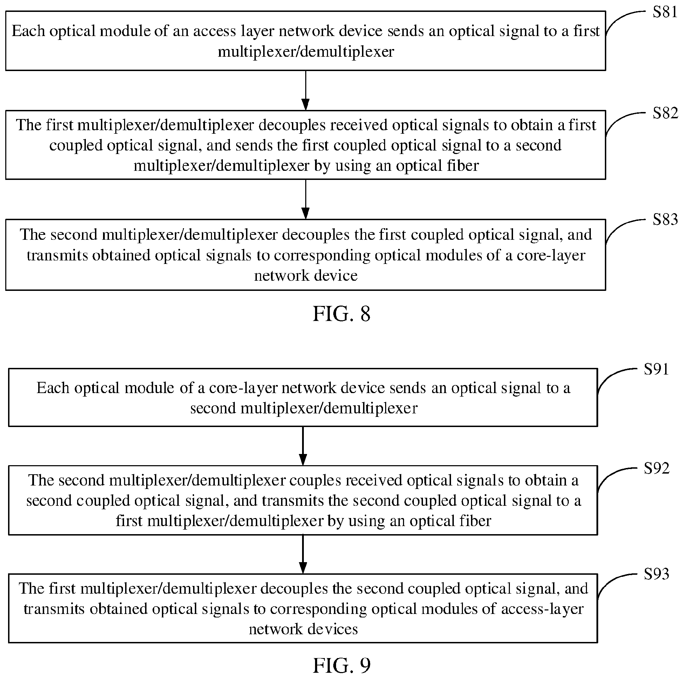

FIG. 8 is a flowchart of an upstream optical signal forwarding method. When an upstream optical signal is forwarded, the method includes the following steps: S81: Each optical module of an access-layer network device sends an optical signal to a first multiplexer/demultiplexer. S82: The first multiplexer/demultiplexer couples received optical signals to obtain a first coupled optical signal, and sends the first coupled optical signal to a second multiplexer/demultiplexer by using an optical fiber. S83: The second multiplexer/demultiplexer decouples the first coupled optical signal, and transmits obtained optical signals to corresponding optical modules of a core-layer network device.

FIG. 9 is a flowchart of a downstream optical signal forwarding method. When a downstream optical signal is forwarded, the method includes the following steps: S91: Each optical module of a core-layer network device sends an optical signal to a second multiplexer/demultiplexer. S92: The second multiplexer/demultiplexer couples received optical signals to obtain a second coupled optical signal, and transmits the second coupled optical signal to a first multiplexer/demultiplexer by using an optical fiber. S93: The first multiplexer/demultiplexer decouples the second coupled optical signal, and transmits obtained optical signals to corresponding optical modules of access-layer network devices.

Based on the upstream optical signal forwarding method and the downstream optical signal forwarding method, an optical signal can be forwarded in the network system of the campus network shown in FIG. 1. Since the aggregation-layer network device is passive, a requirement for a low voltage room is greatly reduced relative to an active aggregation-layer network device. This greatly expands an application range, and greatly improves applicability of the passive aggregation-layer network device.

The present application is described with reference to the flowcharts and/or block diagrams of the method, the device (system), and the computer program product according to the embodiments of the present application. It should be understood that computer program instructions may be used to implement each process in the flowcharts and a combination of processes in the flowcharts. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts.

These computer program instructions may be stored in a computer-readable memory that can instruct a computer or other programmable data processing devices to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may be loaded onto a computer or other programmable data processing devices, so that a series of operations and steps are performed on the computer or the programmable devices to generate computer-implemented processing. Therefore, the instructions executed on the computer or the programmable devices provide steps for implementing a specific function in one or more processes in the flowcharts.

Although optional embodiments of the present application are described, a person skilled in the art may make other changes and modifications to these embodiments once learning of a basic creative concept. Therefore, the appended claims are intended to be construed as including the optional embodiments and all changes and modifications that fall within the scope of the present application.It is clear that a person skilled in the art can make various modifications and variations to the embodiments of the present application without departing from the spirit and the scope of the embodiments of the present application. In this way, the present application is also intended to include these modifications and variations, provided that these modifications and variations of the embodiments of the present application fall within the scope of the claims of the present application and equivalent technologies thereof.

## Claims

1. A passive aggregation-layer network device, wherein the passive aggregation-layer network device comprises a first multiplexer/demultiplexer, a second multiplexer/demultiplexer, and an optical fiber connected to the first multiplexer/demultiplexer and the second multiplexer/demultiplexer;
the first multiplexer/demultiplexer comprises a specified quantity of optical interfaces, and each optical interface of the first multiplexer/demultiplexer is connected to an optical module of one access-layer network device;
the second multiplexer/demultiplexer comprises the specified quantity of optical interfaces, and each optical interface of the second multiplexer/demultiplexer is connected to an optical module of one core-layer network device;
the first multiplexer/demultiplexer receives optical signals of optical modules of a plurality of access-layer network devices connected to the first multiplexer/demultiplexer, couples the plurality of received optical signals to obtain a first coupled optical signal, and sends the first coupled optical signal to the second multiplexer/demultiplexer by using the optical fiber; and
the second multiplexer/demultiplexer decouples the first coupled optical signal, and transmits a plurality of obtained optical signals to corresponding optical modules of core-layer network devices.

2. The passive aggregation-layer network device according to claim 1, wherein the second multiplexer/demultiplexer receives optical signals of optical modules of a plurality of core-layer network devices connected to the second multiplexer/demultiplexer, couples the plurality of received optical signals to obtain a second coupled optical signal, and sends the second coupled optical signal to the first multiplexer/demultiplexer by using the optical fiber; and
the first multiplexer/demultiplexer decouples the second coupled optical signal, and transmits a plurality of obtained optical signals to corresponding optical modules of access-layer network devices.

3. The passive aggregation-layer network device according to claim 1, wherein the optical module of the access-layer network device and the optical module of the core-layer network device each have a transmit center wavelength and a receive center wavelength, a transmit center wavelength and a receive center wavelength of a same optical module of an access-layer network device have different wavelengths, and a transmit center wavelength and a receive center wavelength of a same optical module of a core-layer network device have different wavelengths.

4. The passive aggregation-layer network device according to claim 3, wherein a transmit center wavelength of an optical module of each access-layer network device is different from a transmit center wavelength of an optical module of another access-layer network device, and a receive center wavelength of an optical module of each access-layer network device is different from a receive center wavelength of an optical module of another access-layer network device.

5. The passive aggregation-layer network device according to claim 3, wherein a transmit center wavelength of an optical module of each core-layer network device is different from a transmit center wavelength of an optical module of another core-layer network device, and a receive center wavelength of an optical module of each core-layer network device is different from a receive center wavelength of an optical module of another core-layer network device.

6. The passive aggregation-layer network device according to any one of claims 1 to 5, wherein a transmit center wavelength and a receive center wavelength of one optical module of an access-layer network device respectively correspond to a receive center wavelength and a transmit center wavelength of one optical module of a core-layer network device.

7. The passive aggregation-layer network device according to any of claims 1 to 5, wherein the first multiplexer/demultiplexer and the second multiplexer/demultiplexer are of a type of a coarse wavelength division multiplexer, or the first multiplexer/demultiplexer and the second multiplexer/demultiplexer are of a type of a dense wavelength division multiplexer.

8. The passive aggregation-layer network device according to any one of claims 1 to 5, wherein the passive aggregation-layer network device comprises a plurality of aggregation modules, the plurality of aggregation modules comprise a first aggregation module and a second aggregation module, the first aggregation module comprises a first multiplexer/demultiplexer, a second multiplexer/demultiplexer, and a first optical fiber connected to the first multiplexer/demultiplexer and the second multiplexer/demultiplexer, and the second aggregation module comprises a third multiplexer/demultiplexer, a fourth multiplexer/demultiplexer, and a second optical fiber connected to the third multiplexer/demultiplexer and the fourth multiplexer/demultiplexer.

9. A network system, wherein the network system comprises at least one core-layer network device, at least one passive aggregation-layer network device according to any one of claims 1 to 8, and at least two access-layer network devices.

10. The network system according to claim 9, wherein the core-layer network device and the access-layer network device each comprise at least one optical module.

11. A working method for a passive aggregation-layer network device, wherein the passive aggregation-layer network device comprises a first multiplexer/demultiplexer, a second multiplexer/demultiplexer, and an optical fiber connected to the first multiplexer/demultiplexer and the second multiplexer/demultiplexer, the first multiplexer/demultiplexer is connected to a plurality of access-layer network devices, the second multiplexer/demultiplexer is connected to a plurality of core-layer network devices, the core-layer network device and the access-layer network device each comprise at least one optical module, and the working method for a passive aggregation-layer network device comprises the following steps:
receiving, by the first multiplexer/demultiplexer, optical signals of optical modules of the plurality of access-layer network devices connected to the first multiplexer/demultiplexer, coupling the plurality of received optical signals to obtain a first coupled optical signal, and sending the first coupled optical signal to the second multiplexer/demultiplexer by using the optical fiber; and
decoupling, by the second multiplexer/demultiplexer, the first coupled optical signal, and transmitting a plurality of obtained optical signals to corresponding optical modules of core-layer network devices.

12. The working method for a passive aggregation-layer network device according to claim 11, further comprising the following steps:
receiving, by the second multiplexer/demultiplexer, optical signals of optical modules of the plurality of core-layer network devices connected to the second multiplexer/demultiplexer, coupling the plurality of received optical signals to obtain a second coupled optical signal, and sending the second coupled optical signal to the first multiplexer/demultiplexer by using the optical fiber; and
decoupling, by the first multiplexer/demultiplexer, the second coupled optical signal, and transmitting a plurality of obtained optical signals to corresponding optical modules of access-layer network devices.
